# EUROPEAN PATENT APPLICATION

(11) **EP 4 782 953 A1**
(43) Date of publication of application: **29.07.2026**
(21) Application number: 26153841.7
(22) Date of filing: 23.01.2026
(51) Int. Cl.: G05D 1/689

(54) **ORBITING METHOD AND APPARATUS, AIRCRAFT, AND COMPUTER-READABLE STORAGE MEDIUM**

(30) Priority: 24.01.2025 CN 202510117314
(71) Applicant: Autel Robotics Co., Ltd., Shenzhen, Guangdong 518055 (CN)
(72) Inventor: LIU, Jiabin, Shenzhen, Guangdong, 518055 (CN)
(74) Representative: Gulde & Partner

(57) **Abstract**

This application discloses an orbiting method and apparatus, an aircraft (101, 170), and a computer-readable storage medium, where the method may be applied to an aircraft (101, 170) equipped with a gimbal camera (1011, 1701), and the method includes: obtaining a route, where the route is used for the aircraft (101, 170) to sequentially orbit over at least one object; controlling, in a process in which the aircraft (101, 170) orbits over a first object (102) based on the route, the gimbal camera (1011, 1701) to lock the first object (102); and when detecting, during flight, that a photographing condition corresponding to the first object (102) is triggered, controlling the gimbal camera (1011, 1701) to obtain image information of the first object (102) through photographing. The first object (102) is any one of the at least one object. In this manner, more sufficient image data can be collected, which is conducive to providing more reliable data support for various inspection tasks.

## Description

### TECHNICAL FIELD

This application relates to the field of aircraft technologies, and in particular, to an orbiting method and apparatus, an aircraft, and a computer-readable storage medium.

### BACKGROUND

In the current field of unmanned aerial vehicle technologies, fixed-wing unmanned aerial vehicles are widely used in target inspection tasks, such as agricultural monitoring, power line checking, and disaster assessment. When performing an inspection task, a fixed-wing unmanned aerial vehicle generally directly flies over an object that needs to be inspected, and checks, photographs, and records the object during the flight by using a mounted camera. However, this inspection manner has limitations, such as insufficient collected data and a possibility of omitting important information.

Therefore, how to collect more sufficient data to provide more reliable data support for various inspection tasks has become a technical problem urgently to be resolved.

### SUMMARY

This application discloses an orbiting method and apparatus, an aircraft, and a computer-readable storage medium, to collect more sufficient image data, which is conducive to providing more reliable data support for various inspection tasks.

The invention is defined by the appended set of claims. The description that follows is subjected to this limitation. Any disclosure lying outside the scope of said claims is only intended for illustrative as well as comparative purposes.

According to a first aspect, an embodiment of this application provides an orbiting method, applied to an aircraft equipped with a gimbal camera, and the method including: obtaining a route, where the route is used for the aircraft to sequentially orbit over at least one object; controlling, in a process in which the aircraft orbits over a first object based on the route, the gimbal camera to lock the first object, where the first object is any one of the at least one object; and when detecting, during flight, that a photographing condition corresponding to the first object is triggered, controlling the gimbal camera to obtain image information of the first object through photographing. In this embodiment, controlling the gimbal camera to lock the first object refers to an active control mode. This mode involves continuously or intermittently adjusting the orientation (e.g., pitch and yaw) of the gimbal camera based on the relative position between the aircraft and the target object, such that the target object remains within a field of view of the gimbal camera, preferably at the centre of the field of view, as the aircraft moves along the route. While a gimbal camera is described, the invention may utilize any imaging capturing device coupled with a direction adjustment mechanism. This includes mechanical gimbals (2-axis or 3-axis), turret-style cameras, or camera systems utilizing electronic image stabilization and digital cropping to effectively lock onto a subject by adjusting the active pixel region, thereby simulating the mechanical movement of a gimbal.

In this technical solution, orbiting the object along the route is conducive to photographing the object from all angles, to obtain more sufficient image data and avoid omission of important image information. This is conducive to providing more reliable data support for various inspection tasks. According to a second aspect, it can be learnt that in a process in which an aircraft orbits over an object, a gimbal camera keeps facing the object. Because the aircraft has controlled the gimbal camera to lock the object in a process in which the aircraft orbits over the object based on a route, the gimbal camera can successfully obtain image information of the object through photographing whenever the aircraft detects that a photographing condition corresponding to the object is triggered. According to a third aspect, when an aircraft controls a gimbal camera to perform photographing, the aircraft does not need to hover, which is conducive to saving time in completing a route task.

In an implementation, the route includes a sub-route corresponding to each of at least one object, a first sub-route is used for the aircraft to orbit over a first object, and the first sub-route is a sub-route corresponding to the first object.

In an implementation, that the aircraft orbits over the first object based on the route includes: The aircraft flies based on the first sub-route, or the aircraft flies within a first observation region, where the first observation region is an observation region corresponding to the first object, an observation region corresponding to each of the at least one object is determined based on the sub-route corresponding to each of the at least one object, a center of the first observation region is the same as a center of a graphic formed by the first sub-route, and an area of the first observation region is greater than an area of the graphic formed by the first sub-route. In an embodiment, the graphic may be a geometric shape defined by or a shape of the first sub-route. In an embodiment, the aircraft may fly based on the first sub-route by flying along or following the first sub-route.

In this technical solution, in a process in which the aircraft flies within the first observation region, the aircraft controls the gimbal camera to lock the first object. This allows the aircraft to control the gimbal camera to face the first object before flying on the first sub-route. In a process in which the aircraft orbits over the first object, the gimbal camera can obtain image information of the first object through photographing whenever the gimbal camera performs photographing.

In an implementation, the method further includes: when the aircraft completes a flight task on the first sub-route, or when the aircraft flies away from the first observation region, controlling the gimbal camera to stop locking the first object.

In an implementation, a second parameter is determined based on a first parameter and a first value, where the first parameter is used to determine the area of the graphic formed by the first sub-route, and the second parameter is used to determine the area of the first observation region.

In an implementation, the at least one object further includes a second object; and the first parameter is different from a third parameter, the first parameter is used to determine the area of the graphic formed by the first sub-route, the third parameter is used to determine an area of a graphic formed by a second sub-route, and the second sub-route is used for the aircraft to orbit over the second object.

In an implementation, the method further includes: controlling, in the process in which the aircraft orbits over the first object based on the route, the gimbal camera to zoom to a first focal length.

In this technical solution, in the process in which the aircraft orbits over the first object based on the route, the gimbal camera is controlled to zoom to the first focal length, so that a proportion of the first object in the image obtained through photographing meets a requirement. In addition, objects of various sizes can be adapted to, so that different objects have appropriate sizes in the image.

In an implementation, the at least one object further includes a second object; and the method further includes: controlling, in a process in which the aircraft orbits over the second object based on the route, the gimbal camera to zoom to a second focal length, where the second focal length is different from the first focal length.

In an implementation, that the photographing condition corresponding to the first object is triggered includes one or more of the following: The aircraft passes through any first ray, where the first ray uses a center of the graphic formed by the first sub-route as an origin, the first ray and the first sub-route are on a same plane, and a quantity of first rays is at least one; in the process in which the aircraft flies based on the first sub-route, flying duration of the aircraft reaches first duration; and in the process in which the aircraft flies based on the first sub-route, a flying distance of the aircraft reaches a first distance. In an embodiment, the aircraft may pass through any first ray by intersecting or crossing any first ray.

In this technical solution, because the aircraft has controlled the gimbal camera to lock the first object in the process in which the aircraft orbits over the first object based on the route, the gimbal camera can successfully obtain image information of the first object through photographing whenever the aircraft detects that a photographing condition corresponding to the first object is triggered. According to a second aspect, a gimbal camera is controlled to perform photographing when a photographing condition is triggered, rather than perform photographing throughout an entire route. This is conducive to saving storage space of an aircraft and is also conducive to enhancing efficiency of processing image information subsequently. According to a third aspect, when an aircraft controls a gimbal camera to perform photographing, the aircraft does not need to hover, which is conducive to saving time in completing a route task.

In an implementation, the quantity of first rays is at least three, and an angle between adjacent first rays is the same.

In this technical solution, the angle between the adjacent first rays is the same, so that the first rays can be evenly distributed. In this way, the first object can be photographed from all angles and in a balanced manner, to obtain more comprehensive image information.

In an implementation, the method further includes: receiving a first message, where the first message includes the route, or the first message includes first information used for generating the route.

In an implementation, the first information includes first position information of the at least one object, and the first position information of the at least one object includes a longitude, a latitude, and an altitude of the at least one object; and an altitude of the first sub-route is a sum of an altitude of the first object and a first height of the first object. In an embodiment, the first height may be a relative flight altitude associated with the first object or a first clearance height above the first object. The first height (or relative flight altitude) represents a predetermined vertical clearance or vertical offset added to the altitude of the object. This parameter ensures the aircraft orbits above the object at a safe and optimal viewing angle, rather than at the same horizontal level as the object's base.

In an implementation, first position information of the first object is obtained by adjusting second position information of the first object.

In this technical solution, the second position information of the first object can be edited again, to obtain the first position information of the first object, which is conducive to improving accuracy of the first position information.

According to a second aspect, an embodiment of this application provides an orbiting apparatus. The apparatus includes a unit used for implementing the method according to the first aspect. In an embodiment, the orbiting apparatus may be included in the aircraft.

According to a third aspect, an embodiment of this application provides an aircraft, including a gimbal camera and a processor, where the processor is configured to perform the method according to the first aspect. In an embodiment, the aircraft may include the orbiting apparatus instead of the processor.

In an optional implementation, the aircraft may further include a memory, where the memory is configured to store a computer program or instructions; and the processor is specifically configured to invoke the computer program or the instructions from the memory to perform the method according to the first aspect.

According to a fourth aspect, an embodiment of this application provides a computer-readable storage medium. The computer-readable storage medium stores a computer program or computer instructions; and when the computer program or the computer instructions are executed, an aircraft is enabled to perform the method according to the first aspect.

According to a fifth aspect, an embodiment of this application provides a computer program product including a computer program or instructions. When the computer program or the instructions are run on an aircraft, the aircraft is enabled to perform the method according to the first aspect.

### BRIEF DESCRIPTION OF THE DRAWINGS

FIG. 1 is a schematic diagram of an application scenario to which an embodiment of this application is applicable;
FIG. 2 is a schematic flowchart of an orbiting method according to an embodiment of this application;
FIG. 3 is a schematic top view of a sub-route a, a sub-route b, and a sub-route c according to an embodiment of this application;
FIG. 4 is a schematic top view of an observation region a, an observation region b, and an observation region c according to an embodiment of this application;
FIG. 5 is a schematic diagram of controlling a gimbal camera to lock an object a in a process in which an aircraft flies within an observation region a according to an embodiment of this application;
FIG. 6 is a schematic diagram of an aircraft controlling a gimbal camera to stop locking an object a according to an embodiment of this application;
FIG. 7 is a schematic top view of an aircraft passing through a first ray according to an embodiment of this application;
FIG. 8 is a schematic diagram of a first sector-shaped region according to an embodiment of this application;
FIG. 9 is a schematic diagram of a graphic formed by a first sub-route being an ellipse according to an embodiment of this application;
FIG. 10 is a schematic diagram of a graphic formed by a first sub-route being a rhombus according to an embodiment of this application;
FIG. 11 is a schematic flowchart of another orbiting method according to an embodiment of this application;
FIG. 12 is a schematic diagram of relative flight altitudes respectively corresponding to an object a, an object b, and an object c according to an embodiment of this application;
FIG. 13 is a schematic diagram of a first configuration interface according to an embodiment of this application;
FIG. 14 is a schematic diagram of a second configuration interface according to an embodiment of this application;
FIG. 15 is a schematic diagram of a third configuration interface according to an embodiment of this application;
FIG. 16 is a schematic diagram of a structure of an orbiting apparatus according to an embodiment of this application; and
FIG. 17 is a schematic diagram of a structure of an aircraft according to an embodiment of this application.

### DETAILED DESCRIPTION

It should be understood that, in embodiments of this application, the terms "first", "second", and the like are used to distinguish between different objects but do not indicate a particular order. In the embodiments of this application, "at least one" means one or more, and "a plurality of" means two or more. The term "and/or" in the embodiments of this application describes an association relationship for describing associated objects and represents that three relationships may exist. For example, A and/or B may represent the following three cases: Only A exists, both A and B exist, and only B exists. A and B may be singular or plural. A character "/" may indicate an "or" relationship between the associated objects. In addition, the character "/" may also represent a division sign, that is, to perform a division operation.

In this embodiment of this application, "at least one item (piece) of the following" or a similar expression thereof means any combination of these items, including a singular item (piece) or any combination of plural items (pieces). For example, at least one of a, b, or c may represent the following seven cases: a, b, c, a and b, a and c, b and c, or a, b, and c. Each of a, b, and c may be an element or a set including one or more elements.

In the embodiments of this application, the terms "corresponding (corresponding)", "associated and related (associated and related)", "corresponding and relevant (corresponding and relevant)", and "mapped (mapped)" may sometimes be used interchangeably. It should be noted that, when a distinction is not emphasized, concepts or meanings to be expressed are consistent.

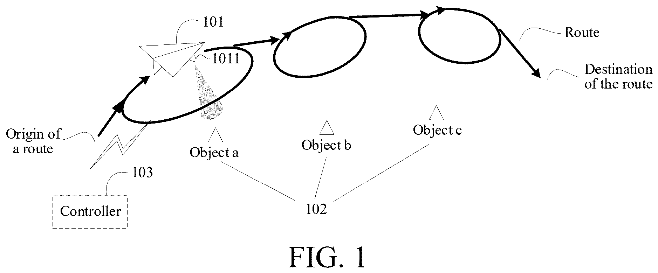

FIG. 1 is a schematic diagram of an application scenario to which an embodiment of this application is applicable. The application scenario may include, but is not limited to, one aircraft and at least one object. The aircraft is equipped with a gimbal camera. A quantity and a form of a device and an object that are shown in FIG. 1 are used as examples and do not constitute a limitation on the embodiments of this application. During actual application, two or more aircrafts and more objects may be included. In the application scenario shown in FIG. 1, one aircraft 101 and three objects 102 are used as an example. The three objects 102 are an object a, an object b and an object c respectively, and the aircraft 101 is equipped with a gimbal camera 1011.

The aircraft 101 may be configured to sequentially orbit over the three objects based on a route, and control the gimbal camera 1011 to photograph image information of the three objects. An example of a process in which the aircraft 101 orbits over the object a in FIG. 1 is used. During flight, the aircraft 101 may photograph the image information of the object a. In FIG. 1, a thick solid line represents the route, and a gray-filled sector-shaped region represents a photographing range of the gimbal camera 1011.

Optionally, the application scenario shown in FIG. 1 may further include a controller of the aircraft. One controller may establish a communication connection with at least one aircraft, and the controller may control flight of the at least one aircraft through the communication connection. The application scenario shown in FIG. 1 uses an example in which one controller 103 is included. The controller 103 has a communication connection with the aircraft 101, and the controller 103 is configured to control flight of the aircraft 101. In the embodiments of this application, a manner for the communication connection between the aircraft and the controller is not limited. It may be understood that, when the application scenario shown in FIG. 1 includes the controller 103, both the aircraft 101 and the controller 103 have wireless transceiver functions.

The aircraft 101 may include, but is not limited to, an unmanned aircraft and a manned aircraft. In the embodiments of this application, a form of the aircraft 101 is not limited. For example, the form of the aircraft 101 may include, but is not limited to: a fixed-wing aircraft, a rotary-wing aircraft, a model aircraft, an airship, a hot air balloon, and a robot. The rotary-wing aircraft may include, but is not limited to, a helicopter and a multirotor aircraft.

The object 102 may include, but is not limited to, a movable object and a non-movable object. In the embodiments of this application, a form of the object 102 is not limited. The form of the object 102 may be a thing or an animal. For example, the form of the object 102 may include, but is not limited to: a device, a cable line, a building, a road, a bridge, a mountain, a forest, a river, a plant, and an animal. The device may include, but is not limited to, a vehicle, a signal tower, a substation device, and an agricultural irrigation device.

In the embodiments of this application, a form of the controller 103 is not limited. For example, the form of the controller 103 may include, but is not limited to: a remote control, a mobile phone (mobile phone), a tablet computer (pad), a desktop computer, a notebook computer, an all-in-one computer, a virtual reality (virtual reality, VR) terminal device, an augmented reality (augmented reality, AR) terminal device, a handheld device, and a wearable device.

It may be understood that, the application scenario described in the embodiments of this application is intended to describe the technical solutions in the embodiments of this application more clearly, and does not constitute a limitation on the technical solutions provided in the embodiments of this application. A person of skill in the art may learn that with the evolution of a technology and emergence of new service scenarios, the technical solutions provided in the embodiments of this application are also applicable to similar technical problems.

The following describes the orbiting method proposed in the embodiments of this application. The orbiting method may be performed by an aircraft or by an apparatus matching the aircraft (such as an apparatus with a chip or a processor that is placed inside the aircraft). In the embodiments of this application, an example in which the orbiting method is performed by an aircraft is used for description, and the aircraft is equipped with a gimbal camera.

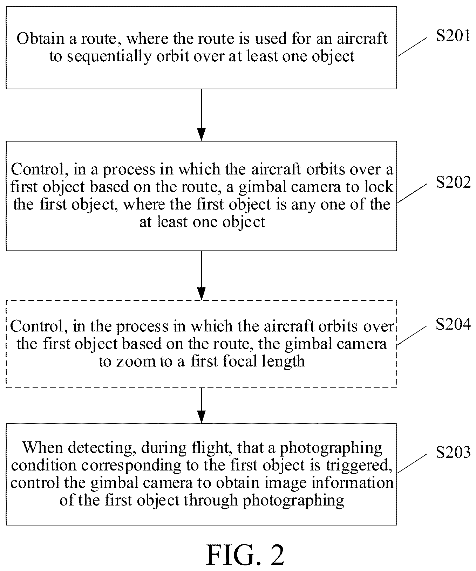

FIG. 2 is a schematic flowchart of an orbiting method according to an embodiment of this application. As shown in FIG. 2, the orbiting method may include but is not limited to the following steps.

S201: Obtain a route, where the route is used for an aircraft to sequentially orbit over at least one object.

The following uses an example in which the at least one object is denoted as N objects for description, where N is an integer greater than or equal to 1.

An example in which N=3, and the three objects are the object a, the object b, and the object c that are shown in FIG. 1 is used. It is assumed the route is used for the aircraft to sequentially orbit over the object a, the object b, and the object c, which indicates that in a process in which the aircraft flies based on the route, the aircraft first orbits over the object a; after orbiting over the object a, the aircraft orbits over the object b; after orbiting over the object b, the aircraft orbits over the object c; and after orbiting over the object c, it may indicate that a flight task based on the route ends.

Orbiting over the object along the route is conducive to photographing the object from all angles, to obtain more sufficient image data. This is conducive to providing more reliable data support for various inspection tasks.

In this embodiment of the application, an origin of the route may be a position at which the aircraft is located before the aircraft flies based on the route. Optionally, a destination of the route may be the same as or different from the origin of the route. Optionally, the aircraft flies to the destination of the route based on the route, which may indicate that the flight task based on the route ends. It should be noted that, an example in which the origin and the destination of the route that are shown in FIG. 1 are different is used, and does not constitute a limitation on the embodiments of this application.

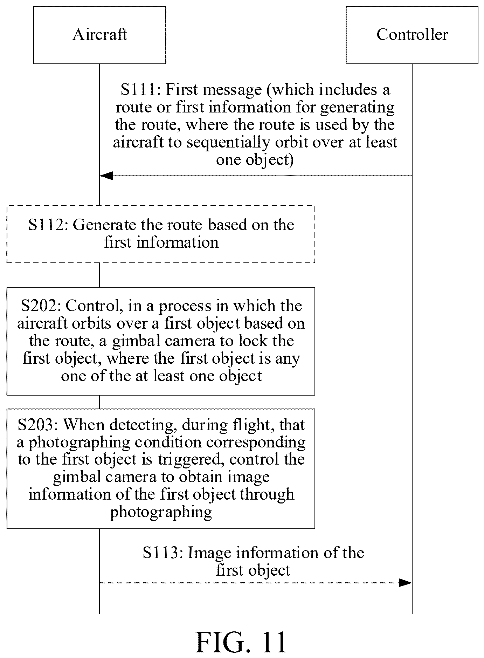

The route may be generated by the aircraft, or the route may be sent by the controller to the aircraft. For a process of generating the route, refer to related descriptions in the corresponding embodiment of FIG. 11.

In a possible implementation, the route may include a sub-route corresponding to each of the N objects, a first sub-route is used for the aircraft to orbit over the first object, and the first sub-route is a sub-route corresponding to the first object. The first object is any one of the N objects.

An example in which N=3 and the three objects are the object a, the object b, and the object c that are shown in FIG. 1 is used. The sub-route corresponding to each of the N objects may include a sub-route corresponding to the object a, a sub-route corresponding to the object b, and a sub-route corresponding to the object c. As shown in FIG. 1, the sub-route corresponding to the object a may be represented by an ellipse over the object a, the sub-route corresponding to the object b may be represented by an ellipse over the object b, and the sub-route corresponding to the object c may be represented by an ellipse over the object c.

It should be noted that, graphics formed by sub-routes corresponding to different objects may be the same or may be different. Graphics formed by the sub-routes corresponding to the object a, the object b, and the object c that are shown in FIG. 1 are all ellipses and are used as examples, but do not constitute a limitation on the embodiments of this application. During actual application, the graphic formed by the sub-route corresponding to the object a may be different from the graphic formed by the sub-route corresponding to the object b, and the graphic formed by the sub-route corresponding to the object a may be the same as the graphic formed by the sub-route corresponding to the object c. For example, the graphics formed by the sub-routes corresponding to the object a and the object c are all ellipses, and the graphic formed by the sub-route corresponding to the object b is a circle or a rhombus.

In a possible implementation, when the graphics formed by the sub-routes are different, a parameter type used to determine the sub-route may be different. The parameter type used to determine the sub-route may include, but is not limited to: a radius of a circle, a diameter of a circle, a semi-major axis and a semi-minor axis of an ellipse, a major axis and a minor axis of an ellipse, and lengths of two diagonals of a rhombus.

For example, using a sub-route (for example, referred to as a sub-route a) as an example, it is assumed that a graphic formed by the sub-route a is a circle, and a parameter type used to determine an area of the graphic formed by the sub-route a may be the radius or the diameter of the circle. It is assumed that a graphic formed by the sub-route a is an ellipse, and a parameter type used to determine an area of the graphic formed by sub-route a may be the semi-major axis and the semi-minor axis of the ellipse, or the major axis and the minor axis of the ellipse. It is assumed that a graphic formed by the sub-route a is a rhombus, and a parameter type used to determine an area of the graphic formed by the sub-route a may be lengths of two diagonals of the rhombus.

In a possible implementation, the N objects may further include a second object, and a first parameter and a third parameter may be different or may be the same. The first parameter is used to determine the area of the graphic formed by the first sub-route, the third parameter is used to determine an area of a graphic formed by a second sub-route, and the second sub-route is used for the aircraft to orbit over the second object. The second object is different from the first object.

An example in which graphics formed by both the first sub-route and the second sub-route are circles and both the first parameter and the third parameter are radii is used. That the first parameter is different from the third parameter may indicate that a radius of the circle formed by the first sub-route is different from a radius of the circle formed by the second sub-route. That the first parameter is the same as the third parameter may indicate that the radius of the circle formed by the first sub-route is the same as the radius of the circle formed by the second sub-route.

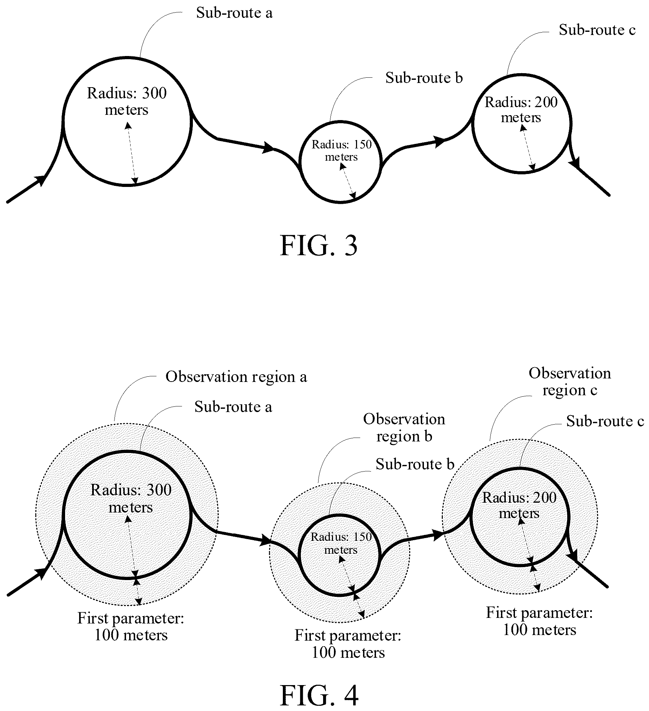

An example in which N=3 and the sub-routes corresponding to the three objects are the sub-route a, the sub-route b, and the sub-route c respectively is used. It is assumed that the graphic formed by the sub-route a, the graphic formed by the sub-route b, and the graphic formed by the sub-route c are all circles, and the radius of the circle formed by the sub-route a, the radius of the circle formed by the sub-route b, and the radius of the circle formed by the sub-route c are 300 meters, 150 meters, and 200 meters respectively. Top views of the sub-route a, the sub-route b, and the sub-route c are shown in FIG. 3.

Optionally, each of the N objects may have an area parameter, and the area parameter corresponding to each object is separately used to determine an area of a graphic formed by a sub-route corresponding to each object. For example, the first parameter is an area parameter corresponding to the first object, and the second parameter is an area parameter corresponding to the second object. Optionally, area parameters corresponding to different objects may be the same or may be different.

Optionally, the aircraft or the controller may individually set or modify the area parameter corresponding to each object, or the aircraft or the controller may uniformly set or modify the area parameter corresponding to each object.

In a possible implementation, each of the N objects may have a corresponding observation region, and the observation region corresponding to each of the N objects is determined based on the sub-route corresponding to each of the N objects. A center of the observation region corresponding to each of the N objects is separately the same as a center of the graphic formed by the sub-route corresponding to each of the N objects, and an area of the observation region corresponding to each of the N objects is separately greater than an area of the graphic formed by the sub-route corresponding to each of the N objects. It may be understood that, the observation region corresponding to each of the N objects and the graphic formed by the sub-route corresponding to each of the N objects are separately located on a same plane.

For example, one of the N objects (such as the first object) is used as an example. An observation region (denoted as the first observation region below) corresponding to the first object may be determined based on the first sub-route. A center of the first observation region is the same as a center of the graphic formed by the first sub-route. The first observation region and the graphic formed by the first sub-route are located on a same plane. An area of the first observation region is greater than the area of the graphic formed by the first sub-route.

Optionally, a graphic formed by the observation region corresponding to each of the N objects and the graphic formed by the sub-route corresponding to each of the N objects may be the same or may be different. One of the N objects (such as the first object) is used as an example. A graphic formed by the first observation region and the graphic formed by the first sub-route may be the same or may be different. For example, both the graphic formed by the first sub-route and the graphic formed by the first observation region are circles. Alternatively, the graphic formed by the first sub-route is a circle, and the graphic formed by the first observation region is a square.

In a possible implementation, the second parameter may be determined based on the first parameter and a first value, where the first parameter is used to determine the area of the graphic formed by the first sub-route, and the second parameter is used to determine the area of the first observation region. Referring to a manner for determining the second parameter, another parameter may be determined. The another parameter is used to determine an area of an observation region corresponding to an object other than the first object.

Optionally, the second parameter may be a sum of the first parameter and the first value. In this case, the first value is greater than zero, so that the second parameter is greater than the first parameter. Alternatively, the second parameter may be a product of the first parameter and the first value. In this case, the first value is greater than 1, so that the second parameter is greater than the first parameter.

Using the sub-route a corresponding to the object a, the sub-route b corresponding to the object b, and the sub-route c corresponding to the object c that are shown in FIG. 3 as an example. The radius of the circle formed by the sub-route a, the radius of the circle formed by the sub-route b, and the radius of the circle formed by the sub-route c are 300 meters, 150 meters, and 200 meters respectively. Assuming that a parameter used to determine an area of an observation region is a sum of the first value and a parameter used to determine an area of a graphic formed by a sub-route, and the first value is 100 meters, a radius of a circle formed by an observation region (denoted as an observation region a below) corresponding to the object a, a radius of a circle formed by an observation region (denoted as an observation region b below) corresponding to the object b, and a radius of a circle formed by an observation region (denoted as an observation region c below) corresponding to the object c are 400 meters, 250 meters, and 300 meters respectively. A top view of the observation region a, a top view of the observation region b, and a top view of the observation region c are shown in FIG. 4. In FIG. 4, a gray-filled region represents the observation region.

S202: Control, in a process in which the aircraft orbits over the first object based on the route, the gimbal camera to lock the first object, where the first object is any one of the at least one object.

By controlling the gimbal camera to lock the first object, the aircraft can ensure that the gimbal camera keeps facing the first object when the aircraft orbits over the first object. In this way, in a process in which the aircraft orbits over the first object, the gimbal camera can obtain image information of the first object through photographing whenever the gimbal camera performs photographing.

In a possible implementation, that the aircraft orbits over the first object based on the route may mean: The aircraft flies based on the first sub-route. In other words, in a process in which the aircraft flies based on the first sub-route, the aircraft can control the gimbal camera to lock the first object. An example in which the first object is the object a in FIG. 1, and a graphic formed by the sub-route corresponding to the object a is an ellipse is used. That the aircraft flies based on the first sub-route may mean: The aircraft orbits over the first object based on the elliptical route over the object a in FIG. 1.

In another possible implementation, that the aircraft orbits over the first object based on the route may mean: The aircraft flies within the first observation region. In other words, in a process in which the aircraft flies within the first observation region, the aircraft can control the gimbal camera to lock the first object.

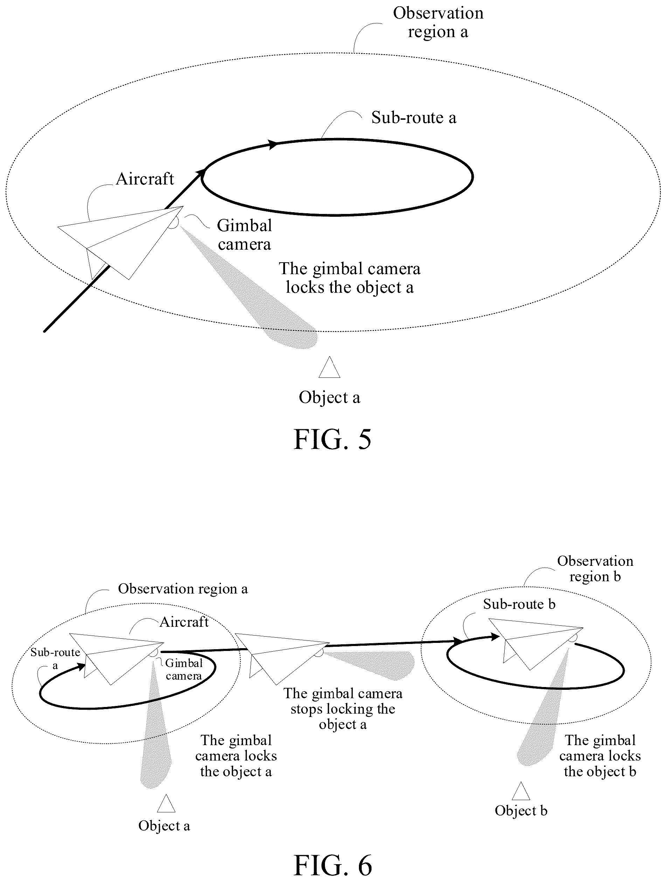

FIG. 5 is a schematic diagram of controlling a gimbal camera to lock an object a in a process in which an aircraft flies within an observation region a according to an embodiment of this application. In FIG. 5, an example in which the first object is the object a is used. The sub-route a represents the sub-route corresponding to the object a, and the observation region a represents the observation region corresponding to the object a. The observation region a is represented by an elliptical region covered by a dashed line. As shown in FIG. 5, when the aircraft enters the observation region a but has not flown on the sub-route a, the aircraft can control the gimbal camera to lock the object a. In this manner, the gimbal camera is controlled to face the first object before the aircraft flies on the first sub-route. In a process in which the aircraft orbits over the first object, the gimbal camera can obtain image information of the first object through photographing whenever the gimbal camera performs photographing.

In a possible implementation, when the aircraft completes a flight task on the first sub-route, or when the aircraft flies away from the first observation region, the gimbal camera may be controlled to stop locking the first object. That the aircraft completes the flight task on the first sub-route may mean: The aircraft has flown through all waypoints of the first sub-route.

FIG. 6 is a schematic diagram of an aircraft controlling a gimbal camera to stop locking an object a according to an embodiment of this application. In FIG. 6, an example in which the first object is the object a is used. The sub-route a represents the sub-route corresponding to the object a, and the observation region a represents the observation region corresponding to the object a; the sub-route b represents the sub-route corresponding to the object b, and the observation region b represents the observation region corresponding to the object b; and the observation region a and the observation region b are represented by elliptical regions covered by dashed lines. As shown in FIG. 6, when the aircraft flies based on the sub-route a or flies within the observation region a, the aircraft controls the gimbal camera to lock the object a. When the aircraft completes the flight task on the sub-route a or flies away from the observation region a, the aircraft controls the gimbal camera to stop locking the object a. As shown in FIG. 6, the gimbal camera stops facing toward the object a. When the aircraft flies based on a new sub-route (namely, the sub-route b) or flies within a new observation region (namely, the observation region b), the aircraft controls the gimbal camera to lock a new object (namely, the object b).

S203: When detecting, during flight, that a photographing condition corresponding to the first object is triggered, control the gimbal camera to obtain image information of the first object through photographing.

Because the aircraft has controlled the gimbal camera to lock the first object in the process in which the aircraft orbits the first object based on the route, the gimbal camera can successfully obtain the image information of the first object through photographing whenever the aircraft detects that the photographing condition corresponding to the first object is triggered. According to a second aspect, the gimbal camera is controlled to perform photographing when the photographing condition is triggered, rather than perform photographing throughout the entire route. This is conducive to saving storage space of the aircraft and is also conducive to enhancing efficiency of processing the image information subsequently. According to a third aspect, when the aircraft controls the gimbal camera to perform photographing, the aircraft does not need to hover, which is conducive to saving time in completing a route task.

It should be noted that, the gimbal camera performing photographing once may be specifically taking a photo or shooting a video. This is not limited in this embodiment of the application. In other words, image information obtained by the gimbal camera through photographing performed once may be either an image of the first object or a video clip of the first object.

In a possible implementation, that the photographing condition corresponding to the first object is triggered may include, but is not limited to, one or more of the following: The aircraft passes through any first ray (denoted as a photographing condition 1 below), where the first ray uses a center of the graphic formed by the first sub-route as an origin, the first ray and the first sub-route are on a same plane, and a quantity of first rays is at least one (denoted as M rays below, where M is an integer greater than or equal to 1); in a process in which the aircraft flies based on the first sub-route, flight duration of the aircraft reaches first duration (denoted as a photographing condition 2 below); and in a process in which the aircraft flies based on the first sub-route, a flight distance of the aircraft reaches a first distance (denoted as a photographing condition 3 below).

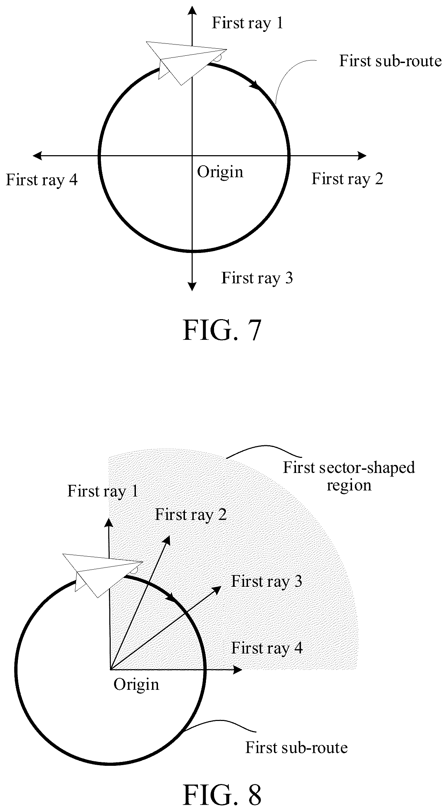

An example in which M=4 and four first rays are a first ray 1, a first ray 2, a first ray 3, and a first ray 4 respectively is used. A top view of the aircraft passing through the first ray may be shown in FIG. 7. As shown in FIG. 7, when the aircraft passes through one of the M first rays (namely, the first ray 1), the photographing condition 1 is triggered, and the aircraft can control the gimbal camera to obtain the image information of the first object (not shown in FIG. 7) through photographing. It may be understood that, when the aircraft passes through another first ray (such as the first ray 2, the first ray 3, or the first ray 4), the photographing condition 1 is also triggered, and the aircraft can control the gimbal camera to obtain the image information of the first object through photographing again. As shown in FIG. 7, the aircraft orbits over the first object, and passes through exactly the four first rays.

Optionally, when a quantity of first rays is at least 3 (that is, M≥3), an angle between adjacent first rays may be the same or may be different. The angle between the adjacent first rays is the same, so that the M first rays can be evenly distributed. In this way, the first object can be photographed from all angles and in a balanced manner, to obtain more comprehensive image information.

The photographing condition 2 may be understood as taking photos at a set time point, and set duration is the first duration. In other words, in a process in which the aircraft flies based on the first sub-route, the aircraft can control the gimbal camera to photograph the first object once every first duration.

The photographing condition 3 may be understood as taking photos in a fixed distance, and a fixed distance is the first distance. In other words, in a process in which the aircraft flies based on the first sub-route, the aircraft can control the gimbal camera to photograph the first object once each time the aircraft flies by the first distance.

Optionally, a value of M, directions of the M first rays, the first duration, and the first distance may be set by default by the aircraft or the controller; or a value of M, directions of the M first rays, the first duration, and the first distance may be set or modified by the aircraft or the controller according to a user operation. In the embodiments of this application, the value of M, the directions of the M first rays, the first duration, and a specific value and a setting manner of the first distance are not limited.

Optionally, the M first rays may be determined in the following manner: dividing 360 degrees into M equal parts, where each part is (360/M) degrees; and using the center of the graphic formed by the first sub-route as the origin, and constructing, starting from 0 degrees, one ray every (360/M) degrees in a clockwise direction, a counterclockwise direction, or a flight direction of the first sub-route. 0 degrees may refer to a north direction, or a position at which the aircraft has just flown to a line connecting a point on the first sub-route and the origin.

The foregoing describes a case in which in a process in which the aircraft orbits over the first object based on the route, the aircraft controls the gimbal camera to lock the first object, and when detecting, during flight, that the photographing condition corresponding to the first object is triggered, the aircraft controls the gimbal camera to obtain the image information of the first object through photographing. It may be understood that, for steps performed in a process in which the aircraft orbits over another object (such as the second object) based on a route, refer to S202 and S203. Using the second object as an example, in the process in which the aircraft orbits over the second object based on the route, the aircraft can control the gimbal camera to lock the second object, and when detecting that the photographing condition corresponding to the second object is triggered in a process in which the aircraft orbits over the second object, the aircraft controls the gimbal camera to obtain image information of the second object through photographing. For the photographing condition corresponding to the second object, refer to the photographing condition corresponding to the first object. Details are not described herein again.

Through implementation of the embodiments of this application, orbiting the object along the route is conducive to photographing the object from all angles, to obtain more sufficient image data and avoid omission of important image information. This is conducive to providing more reliable data support for various inspection tasks. According to a second aspect, it can be learnt that in a process in which the aircraft orbits over the object, the gimbal camera keeps facing the object. Because the aircraft has controlled the gimbal camera to lock the object in the process in which the aircraft orbits over the object based on the route, the gimbal camera can successfully obtain image information of the object through photographing whenever the aircraft detects that a photographing condition corresponding to the object is triggered. According to a third aspect, when the aircraft controls the gimbal camera to perform photographing, the aircraft does not need to hover, which is conducive to saving time in completing a route task.

In a possible implementation, after S201, the aircraft may further perform S204. It should be noted that, S204 is an optional step. In other words, the aircraft may perform S204 or may not perform S204. Steps shown by dashed lines in FIG. 2 represent optional steps.

S204: Control, in the process in which the aircraft orbits over the first object based on the route, the gimbal camera to zoom to a first focal length.

That the aircraft orbits over the first object based on the route may mean: The aircraft flies based on the first sub-route, or the aircraft flies within the first observation region. For specific content, refer to detailed descriptions in S202. Details are not described herein again.

A focal length is adjusted, so that a proportion of an object in an image obtained through photographing can be adjusted. In the process in which the aircraft orbits over the first object based on the route, the gimbal camera is controlled to zoom to the first focal length, so that a proportion of the first object in the image obtained through photographing meets a requirement. In addition, objects of various sizes can be adapted to, so that different objects have appropriate sizes in the image.

Execution orders of S203 and S204 are not limited in this embodiment of this application. For example, the aircraft can first perform S203 and then perform S204; or the aircraft can first perform S204 and then perform S203; or the aircraft can simultaneously perform S203 and S204.

Each of the N objects may have a corresponding focal length or a corresponding zoom factor. An example in which the N objects include the first object and the second object is used. A focal length corresponding to the first object is the first focal length, and a focal length corresponding to the second object is a second focal length. A zoom factor corresponding to the first object is a first zoom factor, and a zoom factor corresponding to the second object is a second zoom factor. The first zoom factor is used to determine the first focal length. For example, a product of the first zoom factor and a shortest focal length (namely, one focal length) of the gimbal camera is the first focal length. Similarly, the second zoom factor is used to determine the second focal length. For example, a product of the second zoom factor and the shortest focal length of the gimbal camera is the second focal length.

In S204, that the aircraft controls the gimbal camera to zoom to the first focal length may be further described as: The aircraft controls the gimbal camera to zoom to the first zoom factor.

Optionally, focal lengths or zoom factors that correspond to different objects may be the same or may be different. An example in which the N objects include the first object and the second object is used. The second focal length and the first focal length may be the same or may be different; and the first zoom factor and the second zoom factor may be the same or may be different. It may be understood that, in a process in which the aircraft orbits over the second object based on the route, the aircraft can further control the gimbal camera to zoom to the second focal length or the second zoom factor.

Optionally, a focal length or a zoom factor that corresponds to each of the N objects may be set by default by the aircraft or the controller; or a focal length or a zoom factor that corresponds to each of the N objects may be set or modified by the aircraft or the controller according to a user operation. In the embodiments of this application, a specific value and a setting manner of the focal length or the zoom factor that correspond to each object are not limited.

Optionally, the aircraft or the controller may individually set or modify the focal length or the zoom factor that corresponds to each object, or the aircraft or the controller may uniformly set or modify the focal length or the zoom factor that corresponds to each object.

In a possible implementation, after the aircraft completes a flight task on one sub-route (such as the first sub-route), the aircraft can restore a focal length of the gimbal camera to one focal length, or restore a zoom factor of the gimbal camera to one zoom factor. Alternatively, each time the aircraft flies away from an observation region (such as the first observation region), the aircraft can restore a focal length of the gimbal camera to one focal length, or restore a zoom factor of the gimbal camera to one zoom factor.

In another possible implementation, after the aircraft completes a flight task on a last sub-route, the aircraft can restore a focal length of the gimbal camera to one focal length, or restore a zoom factor of the gimbal camera to one zoom factor. Alternatively, after the aircraft flies away from a last observation region, the aircraft can restore a focal length of the gimbal camera to one focal length, or restore a zoom factor of the gimbal camera to one zoom factor. Using the three sub-routes and the three observation regions shown in FIG. 4 an example, based on a route direction, the last sub-route may be determined as a sub-route c and the last observation region may be determined as an observation region c.

It should be noted that, in FIG. 7, that an angle between adjacent first rays in the four first rays is 90 degrees is used as an example. During specific implementation, the angle between the adjacent first rays in the four first rays may be different. For example, an angle between the first ray 1 and the first ray 2 is 30 degrees; an angle between the first ray 2 and the first ray 3 is 30 degrees; an angle between the first ray 3 and the first ray 4 is 30 degrees; and an angle between the first ray 4 and the first ray 1 is 270 degrees. In this manner, the aircraft can photograph the first object at a high frequency in a process of flying between the first ray 1 and the first ray 3, which is conducive to targetedly observing the first object more carefully from specific angles.

Optionally, the M first rays may be evenly distributed on a plane on which the first sub-route is located, as shown in FIG. 7. Alternatively, the M first rays may be concentrated in a sector-shaped region (denoted as a first sector-shaped region below) on a plane on which the first sub-route is located. A schematic diagram of the first sector-shaped region may be shown in FIG. 8. In FIG. 8, a gray-filled region represents the first sector-shaped region. It can be learnt that, the four first rays are concentrated in the first sector-shaped region. In this manner, only an image of the first object at a specific angle can be photographed, to avoid photographing other useless images, which is conducive to saving storage space of the aircraft.

Optionally, the first sector-shaped region may be set by default by the aircraft or the controller, or the first sector-shaped region may be set or modified by the aircraft or the controller according to a user operation. In the embodiments of this application, an angle value and a setting manner of the first sector-shaped region are not limited.

Optionally, the first sector-shaped region may be determined based on a form of the first object and/or a mounting environment of the first object. The form of the first object may represent a position at which the first object is prone to failure, and the mounting environment of the first object may represent which part of the first object is exposed. For example, if the form of the first object is a camera and the mounting environment is a 90-degree corner of a wall, the first sector-shaped region may be set as a range of the 90-degree corner.

In a possible implementation, each object may have a corresponding quantity of times of photographing. Using an object (such as the first object) as an example, a quantity of times of photographing corresponding to the first object refers to a total quantity of times the first object is photographed in a process in which the aircraft flies based on the first sub-route, or a total quantity of times the first object is photographed in a process in which the aircraft flies within the first observation region.

It may be understood that, when a quantity of times of photographing corresponding to an object is fixed, the controller or the aircraft can automatically determine a photographing occasion for photographing each time according to the quantity of times of photographing corresponding to the object, which is conducive to simplifying a procedure. The photographing occasion may refer to a time point at which photographing is performed, or a time point at which photographing is performed when a specific ray is passed through.

Optionally, a quantity of times of photographing corresponding to different objects may be the same or may be different. For example, an example in which N=3 and the three objects are the object a, the object b, and the object c respectively is used. Both a quantity of times of photographing corresponding to the object a and a quantity of times of photographing corresponding to the object b may be 4, and a quantity of times of photographing corresponding to the object c may be 5.

Optionally, a quantity of times of photographing corresponding to each of the N objects may be set by the aircraft or the controller by default. For example, a quantity of times of photographing set by default is 4. Alternatively, a quantity of times of photographing corresponding to each of the N objects may be set or modified by the aircraft or the controller according to a user operation. In the embodiments of this application, a specific value and a setting manner of the quantity of times of photographing corresponding to each object are not limited.

Optionally, the aircraft or the controller may individually set or modify the quantity of times of photographing corresponding to each object, or the aircraft or the controller may uniformly set or modify the quantity of times of photographing corresponding to each object. In this manner, the quantity of times of photographing for a specific object may be increased, to add check on details of the specific object. This specific object may be an object that needs to be checked in an intermediate stage in an inspection process.

Optionally, the quantity of times of photographing corresponding to the object has a specific value range, for example, the value range is greater than 0 times and less than 100 times. In this manner, a case in which the quantity of times of photographing is mistakenly set to 0 can be avoided, to avoid a case in which the aircraft performs flying but does not obtain image information through photographing. In addition, the quantity of times of photographing can be avoided from being set too many, which is conducive to saving the storage space of the aircraft.

Optionally, the first parameter may be set by default by the aircraft or the controller; or the first parameter may be set or modified by the aircraft or the controller according to a user operation. In the embodiments of this application, a specific value and a setting manner of the first parameter are not limited.

Optionally, the first parameter may be determined based on a flight error of the aircraft and/or a wind speed of a region in which a route is located. The flight error of the aircraft represents a maximum distance or an average distance that the aircraft deviates from a set route when flying based on the set route.

Optionally, the first parameter may be positively correlated with the flight error of the aircraft. In other words, the greater the flight error of the aircraft, the greater the first parameter may be; and the smaller the flight error of the aircraft, the smaller the first parameter may be. Optionally, the first parameter may be positively correlated with the wind speed of the region in which the route is located. In other words, the greater the wind speed of the region in which the route is located, the greater the first parameter may be; and the smaller the wind speed of the region in which the route is located, the smaller the first parameter may be.

Optionally, the first parameter is greater than the flight error of the aircraft. In this manner, the aircraft can always stay within a preset observation region when flying based on the preset route. The preset observation region is determined based on the preset route. For example, an example in which the preset route is the sub-route a in FIG. 4 and the preset observation region is the observation region a in FIG. 4 is used. When the aircraft flies based on the sub-route a, even if there is a specific flight error, the aircraft can always stay within the observation region b.

Optionally, using one of the N objects (such as the first object) as an example, the graphic formed by the first sub-route may be determined based on the shape of the first object. An example in which the first object is placed in three-dimensional space and coordinate axes in the three-dimensional space are an x-axis, a y-axis, and a z-axis respectively is used. It is assumed that a size of the first object on a specific coordinate axis differs greatly from a size of the first object on another coordinate axis, and the graphic formed by the sub-route corresponding to the first object may be an ellipse or a rhombus, where two diagonals of the rhombus are not equal. For example, a difference between a size of the first object on the x-axis and a size of the first object on the y-axis is greater than the first size, and a difference between the size of the first object on the x-axis and the size of the first object on the z-axis is greater than the first size. The graphic formed by the first sub-route may be an ellipse or a rhombus.

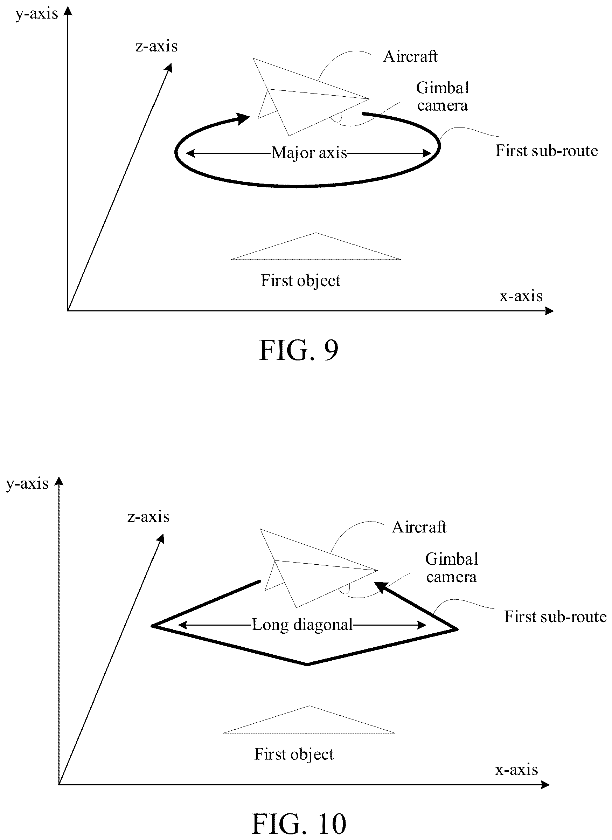

Optionally, it is assumed that the graphic formed by the first sub-route is the ellipse, and a major axis of the ellipse may be parallel to the x-axis. FIG. 9 is a schematic diagram of a graphic formed by a first sub-route being an ellipse. As shown in FIG. 9, the size of the first object on the x-axis differs greatly from the size of the first object on the y-axis and the size of the first object on the z-axis, and the major axis of the ellipse formed by the first sub-route is parallel to the x-axis. Similarly, it is assumed the graphic formed by the first sub-route is the rhombus, and a long diagonal of the rhombus may be parallel to the x-axis. FIG. 10 is a schematic diagram of a graphic formed by a first sub-route being a rhombus. As shown in FIG. 10, the size of the first object on the x-axis differs greatly from the size of the first object on the y-axis and the size of the first object on the z-axis, and the long diagonal of the rhombus formed by the first sub-route is parallel to the x-axis. In this manner, a length of the first sub-route may be shortened, which is conducive to reducing power consumption of the aircraft and shortening duration needed for the flight task. In addition, a distance between the aircraft and the first object is roughly the same in a process in which the aircraft orbits over the first object based on the first sub-route. In this way, the first object can occupy roughly the same proportion in the image obtained through photographing even if the aircraft performs photographing at different positions on the first sub-route, which is conducive to performing more accurate check on the first object through the image obtained through photographing.

Although the sub-routes are illustrated as ellipses, circles, or rhombi, the sub-route corresponding to an object is not limited to these specific shapes. The sub-route may generally be formed as any closed geometric path or substantially closed loop that encircles the position of the target object. This includes regular polygons (e.g., squares, hexagons), irregular polygons defined by waypoints, or curvilinear paths, provided the path allows the aircraft to orbit the object.

Optionally, the first size may be set by default by the aircraft or the controller; or the first size may be set or modified by the aircraft or the controller according to a user operation. In the embodiments of this application, a specific value and a setting manner of the first size are not limited.

FIG. 11 is a schematic flowchart of another orbiting method according to an embodiment of this application. The orbiting method may be performed by an aircraft and a controller of the aircraft, or by an apparatus matching the aircraft (such as an apparatus with a chip or a processor that is placed inside the aircraft) and an apparatus matching the controller (such as an apparatus with a chip or a processor that is placed inside the controller). In the embodiments of this application, an example in which the orbiting method is performed by the aircraft and the controller is used for description, and the aircraft is equipped with a gimbal camera.

S111: The controller sends a first message to the aircraft, where the first message includes a route or first information for generating the route, and the route is used by the aircraft to sequentially orbit over at least one object. Correspondingly, the aircraft receives the first message;

If the first message carries the route, the aircraft can directly fly based on the route after receiving the first message.

If the first message carries the first information, the aircraft can autonomously generate the route based on the first information after receiving the first message. The first information may include first position information of each of N objects. The first position information of each of the N objects may include, but is not limited to, a longitude, a latitude, and an altitude of each object.

Using one of the N objects (such as a first object) as an example, optionally, first position information of the first object may be position information that is obtained by the controller and that is not modified, or first position information of the first object may be obtained by the controller after obtaining second position information of the first object and adjusting the second position information. In this manner, the controller can edit the second position information of the first object again, to obtain the first position information of the first object, which is conducive to improving accuracy of the first position information.

Optionally, the position information (such as the second position information or the first position information) obtained by the controller may be obtained from an imported file; or set by a user; or obtained through querying from a digital elevation model (Digital Elevation Model, DEM) or another dataset. This is not limited in the embodiments of this application. The imported file may be imported by the user through an operation. The DEM is a digital geographic dataset, and the DEM includes elevation information about the Earth's surface topography.

In the embodiments of this application, a format of the imported file is not limited. For example, the format of the imported file may be a keyhole markup language (Keyhole Markup Language, KML). The KML is an extensible markup language (Extensible Markup Language, XML). The KML is used to describe and store geospatial data, such as points, lines, polygons and other geographic features and attribute information.

Optionally, the controller can display a map interface. The map interface includes at least N objects. When detecting a selection operation on the N objects on the map interface, the controller can obtain second position information of the N objects. The selection operation on the N objects may include a tapping operation or a box selection operation that is performed by the user for the N objects. This is not limited in the embodiments of this application.

It should be noted that, after obtaining second position information of each of the N objects, the controller can individually adjust second position information of a part of or all of the N objects. The second position information of the object is individually modified, to adapt to a scenario with an undulating terrain. In the scenario with the undulating terrain, even if a height of an object and a height of a takeoff point of the aircraft are not on a same horizontal plane, the second position information of the object is correctly modified, to obtain the first position information, so that the gimbal camera can accurately photograph the object.

If the first message carries the first information and does not carry the route, the aircraft may further perform S112 after receiving the first message. It should be noted that, S112 is an optional step. In other words, the aircraft may perform S112 or may not perform S112. Steps shown by dashed lines in FIG. 11 represent optional steps.

S112: The aircraft generates the route based on the first information.

Optionally, using a sub-route (such as a first sub-route) in the route as an example, the first sub-route may be determined based on a first position, and the first position may be a center of a graphic formed by the first sub-route. Optionally, a longitude and a latitude of the first position are respectively the same as a longitude and a latitude of the first object, and an altitude of the first position is higher than an altitude of the first object. The altitude of the first position is higher than the altitude of the first object, so that the aircraft can orbit over the first object, making it easier to photograph image information of the first object. With reference to the first sub-route, and a manner for determining the first sub-route based on the first position, another sub-route may be determined. Details are not described herein again. With reference to a manner in which the aircraft generates the route, a manner in which the controller generates a route may be determined. Details are not described herein again.

Optionally, the altitude of the first position may be a sum of the altitude of the first object and a first height. The first height may also be referred to as a relative flight altitude corresponding to the first object.

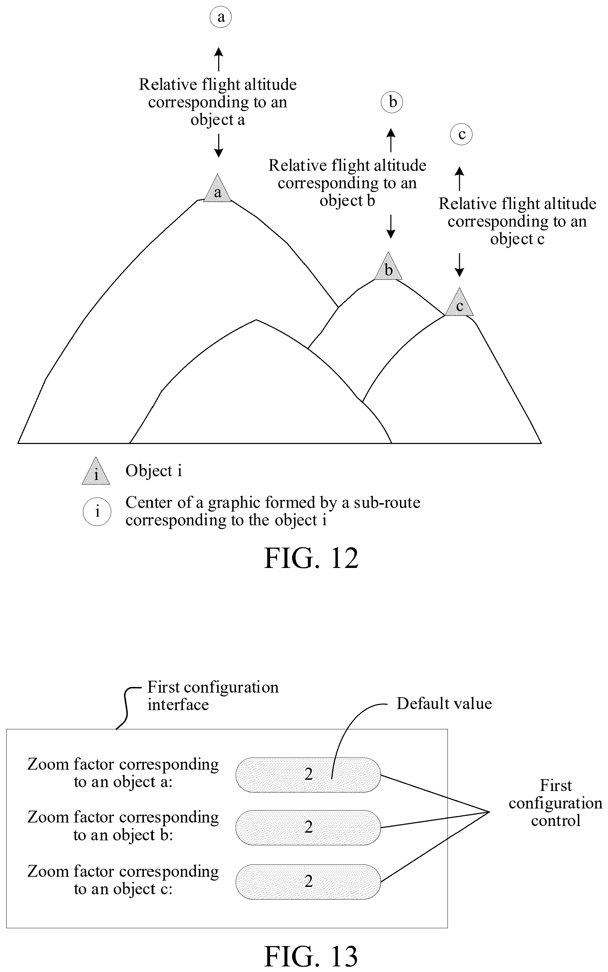

Optionally, each of the N objects may have a corresponding relative flight altitude. Optionally, relative flight altitudes corresponding to different objects may be the same or may be different. An example in which N=3 and the three objects are an object a, an object b, and an object c respectively is used. Relative flight altitudes corresponding to the object a, the object b, and the object c respectively may be shown in FIG. 12. In FIG. 12, a triangle of a mark i represents an object i, and a circle of the mark i represents a center of a graphic formed by a sub-route corresponding to the object i, where i may be a, b, or c. As shown in FIG. 12, an altitude of the center of the graphic formed by the sub-route corresponding to the object i is a sum of an altitude of the object i and a relative flight altitude corresponding to the object i.

Optionally, the relative flight altitude corresponding to each of the N objects may be set by default by the aircraft or the controller; or the relative flight altitude corresponding to each of the N objects may be set or modified by the aircraft or the controller according to a user operation. In the embodiments of this application, a specific value and a setting manner of the relative flight altitude corresponding to each object are not limited.

Optionally, the aircraft or the controller may individually set or modify the relative flight altitude corresponding to each object, or the aircraft or the controller may uniformly set or modify the relative flight altitude corresponding to each object. For example, the relative flight altitude (namely, the first height) corresponding to the first object is adjusted, so that a position of the first object in a field of view of the gimbal camera may be fine-tuned, which is conducive to achieving a better photographing effect.

After S112, the aircraft can perform S202 and S203. For an execution process of S202 and S203, refer to detailed descriptions of the corresponding embodiment in FIG. 2. Details are not described herein again.

Optionally, after S203, the aircraft may further perform S113. It should be noted that, S113 is an optional step. In other words, the aircraft may perform S113 or may not perform S113.

S113: The aircraft sends image information of the first object to the controller. Correspondingly, the controller receives the image information of the first object.

In this embodiment of the application, the aircraft can send the image information of the first object that is obtained through photographing to the controller every time the aircraft photographs the first object. Alternatively, the aircraft can send image information of the N objects to the controller after obtaining the image information of the N objects through photographing. Alternatively, the aircraft can send image information obtained through photographing within latest preset duration to the controller every preset duration. An occasion at which the aircraft sends the image information to the controller is not limited in the embodiments of this application.

In a possible implementation, the controller may individually set or modify a focal length or a zoom factor that corresponds to at least one of the N objects. Using one of the N objects (such as the first object) as an example, the controller may set or modify the focal length or the zoom factor that corresponds to the first object in the following manner: The controller displays a first configuration interface, and the first configuration interface includes first configuration controls of the N objects; and when detecting, on the first configuration interface, that a first configuration control of the first object is triggered, the controller sets or modifies a value of a first focal length, or sets or modifies a value of the first zoom factor, where the first zoom factor is used to determine the first focal length.

An example in which N=3 and the three objects are an object a, an object b, and an object c respectively is used. A schematic diagram of the first configuration interface may be shown in FIG. 13. In FIG. 13, three gray-filled regions represent first configuration controls of the object a, the object b, and the object c respectively. Values in the three gray-filled regions represent default values of zoom factors corresponding to the object a, the object b, and the object c respectively. If a trigger operation on the first configuration control of the object a is detected, the controller may modify the value of the zoom factor (namely, the first zoom factor) corresponding to the object a. It should be noted that, the default value of the zoom factor that is displayed on the first configuration interface is used as an example. It may be understood that, if the default value of the zoom factor is not displayed on the first configuration interface, the controller may set the value of the zoom factor corresponding to the object a when detecting the trigger operation on the first configuration control of the object a.

The trigger operation on the first configuration control of the object a may include, but is not limited to: a tapping operation, mouse hovering, a touch operation, and the like on the first configuration control of the object a. This is not limited in the embodiments of this application.

In a possible implementation, the controller may individually set or modify a quantity of times of photographing corresponding to at least one of the N objects. Using one of the N objects (such as the first object) as an example, the controller may set or modify the quantity of times of photographing corresponding to the first object in the following manner: The controller displays a second configuration interface, and the second configuration interface includes second configuration controls of the N objects; and when detecting, on the second configuration interface, that a second configuration control of the first object is triggered, the controller sets or modifies the quantity of times of photographing corresponding to the first object.

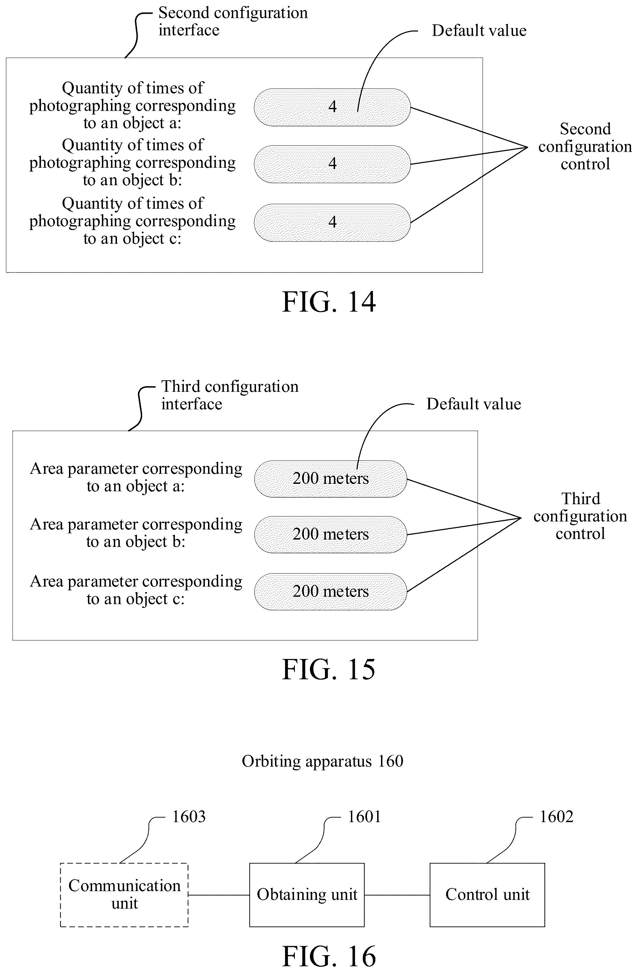

An example in which N=3 and the three objects are an object a, an object b, and an object c respectively is used. A schematic diagram of the second configuration interface may be shown in FIG. 14. In FIG. 14, three gray-filled regions represent second configuration controls of the object a, the object b, and the object c respectively. Values in the three gray-filled regions represent default values of quantities of times of photographing corresponding to the object a, the object b, and the object c respectively. If a trigger operation on the second configuration control of the object a is detected, the controller may modify the value of the quantity of times of photographing corresponding to the object a. It should be noted that, the default value of the quantity of times of photographing that is displayed on the second configuration interface is used as an example. It may be understood that, if the default value of the quantity of times of photographing is not displayed on the second configuration interface, the controller may set the value of the quantity of times of photographing corresponding to the object a when detecting the trigger operation on the second configuration control of the object a.

The trigger operation on the second configuration control of the object a may include, but is not limited to: a tapping operation, mouse hovering, a touch operation, and the like on the second configuration control of the object a. This is not limited in this embodiment of this application.

In a possible implementation, the controller may individually set or modify an area parameter corresponding to at least one of the N objects. Using one of the N objects (such as the first object) as an example, the controller may set or modify the area parameter (namely, the first parameter) corresponding to the first object in the following manner: The controller displays a third configuration interface, and the third configuration interface includes third configuration controls of the N objects; and when detecting, on the third configuration interface, that a third configuration control of the first object is triggered, the controller sets or modifies a value of the first parameter.

An example in which N=3 and the three objects are an object a, an object b, and an object c respectively is used. A schematic diagram of the third configuration interface may be shown in FIG. 15. In FIG. 15, three gray-filled regions represent third configuration controls of the object a, the object b, and the object c respectively. Values in the three gray-filled regions represent default values of area parameters corresponding to the object a, the object b, and the object c respectively. If a trigger operation on the third configuration control of the object a is detected, the controller may modify the value of the area parameter (namely, the first parameter) corresponding to the object a. It should be noted that, the default value of the area parameter that is displayed on the third configuration interface is used as an example. It may be understood that, if the default value of the area parameter is not displayed on the third configuration interface, the controller may set the value of the area parameter corresponding to the object a when detecting the trigger operation on the third configuration control of the object a.

The trigger operation on the third configuration control of the object a may include, but is not limited to: a tapping operation, mouse hovering, a touch operation, and the like on the third configuration control of the object a. This is not limited in this embodiment of this application.

In a possible implementation, the controller may individually set or modify a relative flight altitude corresponding to at least one of the N objects. For a detailed process, refer to a manner in which the controller individually sets or modifies an area parameter corresponding to at least one of the N objects. Details are not described herein again.

Using one of the N objects (such as the first object) as an example, both the area parameter (namely, the first parameter) corresponding to the first object and the relative flight altitude (namely, the first height) corresponding to the first object affect a tilt degree of a line of sight of the gimbal camera for the first object. An example in which the first parameter is a radius is used. The greater first height and/or the smaller first parameter cause/causes the line of sight of the gimbal camera for the first object to tilt downward; and the smaller first height and/or the greater first parameter cause/causes the line of sight of the gimbal camera for the first object to tilt upward.

Therefore, the controller individually sets or modifies one or more of an area parameter corresponding to an object and a relative flight altitude corresponding to an object, so that the line of sight of the gimbal camera for the first object is more in line with a requirement.

FIG. 16 is a schematic diagram of a structure of an orbiting apparatus according to an embodiment of this application. As shown in FIG. 16, the orbiting apparatus 160 includes an obtaining unit 1601 and a control unit 1602. Optionally, the orbiting apparatus 160 may further include a communication unit 1603. The units shown by the dashed line in FIG. 16 are optional units. In other words, the orbiting apparatus 160 may not include the units shown by the dashed line in FIG. 16. The orbiting apparatus 160 may perform a related step of an aircraft in the foregoing method embodiment.

The obtaining unit 1601 is configured to obtain a route, where the route is used for the aircraft to sequentially orbit over at least one object; and
the control unit 1602 is configured to control, in a process in which the aircraft orbits over a first object based on the route, the gimbal camera to lock the first object, where the first object is any one of the at least one object; and when detecting, during flight, that a photographing condition corresponding to the first object is triggered, control the gimbal camera to obtain image information of the first object through photographing.

In a possible implementation, the route includes a sub-route corresponding to each of the at least one object, a first sub-route is used for the aircraft to orbit over the first object, and the first sub-route is a sub-route corresponding to the first object.

In an implementation, that the aircraft orbits over the first object based on the route includes: The aircraft flies based on the first sub-route, or the aircraft flies within a first observation region, where the first observation region is an observation region corresponding to the first object, an observation region corresponding to each of the at least one object is determined based on the sub-route corresponding to each of the at least one object, a center of the first observation region is the same as a center of a graphic formed by the first sub-route, and an area of the first observation region is greater than an area of the graphic formed by the first sub-route.

In an implementation, the control unit 1602 is further configured to: when the aircraft completes a flight task on the first sub-route, or when the aircraft flies away from the first observation region, control the gimbal camera to stop locking the first object.

In an implementation, a second parameter is determined based on a first parameter and a first value, where the first parameter is used to determine the area of the graphic formed by the first sub-route, and the second parameter is used to determine the area of the first observation region.

In an implementation, the at least one object further includes a second object; and the first parameter is different from a third parameter, the first parameter is used to determine the area of the graphic formed by the first sub-route, the third parameter is used to determine an area of a graphic formed by a second sub-route, and the second sub-route is used for the aircraft to orbit over the second object.

In an implementation, the control unit 1602 is further configured to: control, in the process in which the aircraft orbits over the first object based on the route, the gimbal camera to zoom to a first focal length.

In an implementation, the at least one object further includes a second object; and the control unit 1602 is further configured to control, in a process in which the aircraft orbits over the second object based on the route, the gimbal camera to zoom to a second focal length, where the second focal length is different from the first focal length.

In an implementation, that the photographing condition corresponding to the first object is triggered includes one or more of the following: The aircraft passes through any first ray, where the first ray uses a center of the graphic formed by the first sub-route as an origin, the first ray and the first sub-route are on a same plane, and a quantity of first rays is at least one; in the process in which the aircraft flies based on the first sub-route, flying duration of the aircraft reaches first duration; and in the process in which the aircraft flies based on the first sub-route, a flying distance of the aircraft reaches a first distance.

In an implementation, the quantity of first rays is at least three, and an angle between adjacent first rays is the same.

In an implementation, the communication unit 1603 is configured to: receive a first message, where the first message includes the route, or the first message includes first information used for generating the route.

In an implementation, the first information includes first position information of the at least one object, and the first position information of the at least one object includes a longitude, a latitude, and an altitude of the at least one object; and an altitude of the first sub-route is a sum of an altitude of the first object and a first height of the first object.

In an implementation, first position information of the first object is obtained by adjusting second position information of the first object.

Specifically, in this case, for operations performed by the obtaining unit 1601, the control unit 1602, and the communication unit 1603, refer to descriptions of the aircraft in the corresponding embodiments of FIG. 2 to FIG. 15.

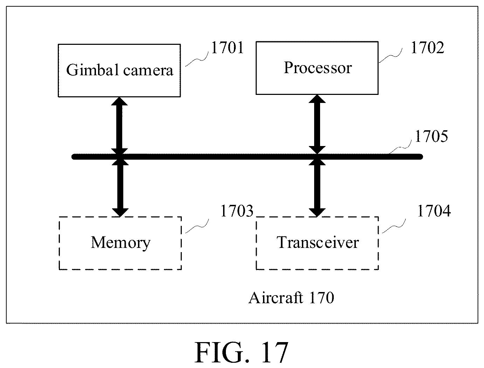

FIG. 17 is a schematic diagram of a structure of an aircraft 170 according to an embodiment of this application. The aircraft 170 may be configured to implement a function of the aircraft in the foregoing method embodiments. The aircraft 170 may include a gimbal camera 1701 and a processor 1702. Optionally, the aircraft 170 may further include a memory 1703 and a transceiver 1704. The gimbal camera 1701, the processor 1702, the memory 1703, and the transceiver 1704 may be connected via a bus 1705 or in another manner. The bus is represented by using a bold line in FIG. 17. A manner of connection between other components is only schematically described, but is not used as a limitation. The bus may be classified into an address bus, a data bus, a control bus, and the like. For ease of representation, only one bold line is used to represent the bus in FIG. 17, but this does not mean that there is only one bus or only one type of bus.

The coupling in this embodiment of this application may be indirect coupling or a communication connection between apparatuses, units, or modules in an electrical form, a mechanical form, or another form, and is used for information exchange between the apparatuses, the units, or the modules. A specific connection medium between the gimbal camera 1701, the processor 1702, the memory 1703, and the transceiver 1704 is not limited in the embodiments of this application.

The memory 1703 may include a read-only memory and a random access memory, and provide instructions and data for the processor 1702. A part of the memory 1703 may further include a non-volatile random access memory.

The processor 1702 may be a central processing unit (Central Processing Unit, CPU). The processor 1702 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, or a discrete hardware component. A general-purpose processor may be a microprocessor, and optionally, the processor 1702 may be any conventional processor and the like.

In an example, when the aircraft uses the form shown in FIG. 17, the processor in FIG. 17 can perform the method performed by the aircraft in any one of the foregoing method embodiments.

In an optional implementation, the memory 1703 is configured to store a computer program or instructions; and the processor 1702 is configured to invoke the computer program or the instructions stored in the memory 1703, to perform the steps performed by the aircraft in the embodiments corresponding to FIG. 2 to FIG. 15.

Specifically, functions/implementation processes of the obtaining unit 1601, the control unit 1602, and the communication unit 1603 in FIG. 16 can all be implemented by the processor 1702 in FIG. 17 by invoking the computer program or the instructions stored in the memory 1703. Alternatively, functions/implementation processes of the obtaining unit 1601 and the control unit 1602 in FIG. 16 may be implemented by the processor 1702 in FIG. 17 by invoking the computer program or the instructions stored in the memory 1703; and a function/an implementation process of the communication unit 1603 in FIG. 16 may be implemented by the transceiver 1704 in FIG. 17.

In the embodiments of this application, a computer program (including program code) that can perform steps in the foregoing methods may be run on a general-purpose computing apparatus, such as a computer, which include processing elements and storage elements such as a CPU, a random access memory (Random Access Memory, RAM), and a read-only memory (Read-Only Memory, ROM), to implement the method provided in the embodiments of this application. The computer program may be recorded in, for example, a computer-readable recording medium, and may be loaded in the aircraft by using the computer-readable recording medium, and run on the aircraft.

Based on the same inventive concept, a principle and beneficial effects of the aircraft 170 provided in the embodiments of this application in resolving the problem are similar to a principle and beneficial effects of the aircraft in the method embodiments of this application in resolving the problem. For the sake of brevity, details are not described herein again.

An embodiment of this application further provides a computer-readable storage medium, the computer-readable storage medium stores a computer program or computer instructions, and the computer program or the computer instructions are suitable for being loaded by an aircraft, to perform the method provided in the embodiments of this application.

An embodiment of this application further provides a computer program product including a computer program or instructions. When the computer program or the instructions are run on an aircraft, the aircraft is enabled to perform the method provided in the foregoing method embodiments.

The modules/units included in the various apparatuses and products described in the foregoing embodiments may be software modules/units, hardware modules/units, or a combination of software modules/units and hardware modules/units. For example, for various apparatuses and products that are applied to or integrated into a chip, the modules/units included therein may be implemented by using hardware such as a circuit, or at least a part of modules/units may be implemented by using a software program. The software program is run in a processor integrated inside the chip, and the remaining (if any) modules/units may be implemented by using hardware such as a circuit. For various apparatuses and products that are applied to or integrated into a chip module, the modules/units included therein may be implemented by using hardware such as a circuit. Different modules/units may be located in a same component (for example, a chip and a circuit module) or different components of the chip module, or at least a part of modules/units may be implemented by using a software program that is run in a processor integrated inside the chip module, and the remaining (if any) modules/units may be implemented by using hardware such as a circuit. For various apparatuses and products that are applied to or integrated into an aircraft, the modules/units included therein may be implemented by using hardware such as a circuit. Different modules/units may be located in a same component (for example, a chip and a circuit module) or different components of the aircraft, or at least a part of modules/units may be implemented by using a software program that is run in a processor integrated inside the aircraft, and the remaining (if any) modules/units may be implemented by using hardware such as a circuit.

It should be noted that, for ease of description, the foregoing method embodiments are stated as a series of action combinations. However, a person skilled in the art is to learn that this application is not limited to the described sequence of the actions because according to this application, some steps may be performed in another sequence or may be simultaneously performed. In addition, a person skilled in the art is also to learn that the embodiments described in this specification are all exemplary embodiments, and the involved actions and modules are not necessarily required to this application.

In the foregoing embodiments, the descriptions of the embodiments have their respective focuses and the plurality of embodiments can be combined and used. For a part that is not described in detail in an embodiment, refer to related descriptions in other embodiments.

A sequence of the steps of the method in the embodiments of this application may be adjusted, and certain steps may also be combined or removed according to an actual requirement.

The modules in the apparatus in the embodiments of this application may be combined, divided, and deleted according to an actual requirement.

A person of ordinary skill in the art may understand that all or some of the steps of the various methods in the foregoing embodiments may be implemented by program instructions and related hardware. The program instructions may be stored in a computer-readable storage medium. The computer-readable storage medium may include a flash drive, a ROM, a RAM, a magnetic disk, or an optical disk.

The foregoing descriptions are merely some embodiments of this application and are merely a part of embodiments of this application, and should not be construed as a limitation on the scope of this application.

## Claims

1. An orbiting method, applied to an aircraft (101, 170) equipped with a gimbal camera (1011, 1701), and the method comprising:
obtaining a route, wherein the route is used for the aircraft (101, 170) to sequentially orbit over at least one object;
controlling, in a process in which the aircraft (101, 170) orbits over a first object (102) based on the route, the gimbal camera (1011, 1701) to lock the first object (102), wherein the first object (102) is any one of the at least one object; and
when detecting, during flight, that a photographing condition corresponding to the first object (102) is triggered, controlling the gimbal camera (1011, 1701) to obtain image information of the first object (102) through photographing.

2. The method according to claim 1, wherein the route comprises a sub-route corresponding to each of the at least one object, a first sub-route is used for the aircraft (101, 170) to orbit over the first object (102), and the first sub-route is a sub-route corresponding to the first object (102).

3. The method according to claim 2, wherein that the aircraft (101, 170) orbits over the first object (102) based on the route comprises: the aircraft (101, 170) flies based on the first sub-route, or the aircraft (101, 170) flies within a first observation region, wherein
the first observation region is an observation region corresponding to the first object (102), an observation region corresponding to each of the at least one object is determined based on the sub-route corresponding to each of the at least one object, a center of the first observation region is the same as a center of a graphic formed by the first sub-route, and an area of the first observation region is greater than an area of the graphic formed by the first sub-route.

4. The method according to claim 3, wherein the method further comprises:
when the aircraft (101, 170) completes a flight task on the first sub-route, or when the aircraft (101, 170) flies away from the first observation region, controlling the gimbal camera (1011, 1701) to stop locking the first object (102).

5. The method according to claim 3, wherein a second parameter is determined based on a first parameter and a first value, the first parameter is used to determine the area of the graphic formed by the first sub-route, and the second parameter is used to determine the area of the first observation region.

6. The method according to any one of claims 2 to 5, wherein the at least one object further comprises a second object; and
a first parameter is different from a third parameter, the first parameter is used to determine the area of the graphic formed by the first sub-route, the third parameter is used to determine an area of a graphic formed by a second sub-route, and the second sub-route is used for the aircraft (101, 170) to orbit over the second object.

7. The method according to any one of claims 1 to 6, wherein the method further comprises:
controlling, in the process in which the aircraft (101, 170) orbits over the first object (102) based on the route, the gimbal camera (1011, 1701) to zoom to a first focal length.

8. The method according to claim 7, wherein the at least one object further comprises a second object; and the method further comprises:
controlling, in a process in which the aircraft (101, 170) orbits over the second object based on the route, the gimbal camera (1011, 1701) to zoom to a second focal length, wherein the second focal length is different from the first focal length.

9. The method according to any one of claims 2 to 8, wherein that the photographing condition corresponding to the first object (102) is triggered comprises one or more of the following:
the aircraft (101, 170) passes through any first ray, wherein the first ray uses a center of the graphic formed by the first sub-route as an origin, the first ray and the first sub-route are on a same plane, and a quantity of first rays is at least one;
in the process in which the aircraft (101, 170) flies based on the first sub-route, flying duration of the aircraft (101, 170) reaches first duration; and
in the process in which the aircraft (101, 170) flies based on the first sub-route, a flying distance of the aircraft (101, 170) reaches a first distance.

10. The method according to claim 9, wherein the quantity of first rays is at least three, and an angle between adjacent first rays is the same.

11. The method according to any one of claims 1 to 10, wherein the method further comprises:
receiving a first message, wherein the first message comprises the route, or the first message comprises first information used for generating the route.

12. The method according to claim 11, wherein the first information comprises first position information of the at least one object, and the first position information of the at least one object comprises a longitude, a latitude, and an altitude of the at least one object; and an altitude of the first sub-route is a sum of an altitude of the first object (102) and a first height of the first object (102).

13. The method according to claim 12, further comprising obtaining the first position information by adjusting second position information of the first object (102).

14. An aircraft (101, 170), comprising a gimbal camera (1011, 1701), a memory (1703), and a processor (1702), wherein the memory (1703) is configured to store a computer program or instructions, and the processor (1702) is configured to execute the computer program or the instructions in the memory (1703); and when the computer program or the instructions are executed by the processor (1702), the aircraft (101, 170) is enabled to perform the method according to any one of claims 1 to 13.

15. A computer-readable storage medium, wherein the computer-readable storage medium stores a computer program or computer instructions; and when the computer program or the computer instructions are executed by an aircraft (101, 170), the aircraft (101, 170) is enabled to perform the method according to any one of claims 1 to 13.
